# EUROPEAN PATENT APPLICATION

(11) **EP 3 545 754 A1**
(43) Date of publication of application: **02.10.2019**
(21) Application number: 19386019.4
(22) Date of filing: 26.03.2019
(51) Int. Cl.: A01G 9/16, A01G 13/02

(54) **MINI METAL FRAMEWORKS FOR MINI GREENHOUSE CONSTRUCTION**

(30) Priority: 29.03.2018 GR 20180100132
(71) Applicant: Kouinis, Dimitrios, 34 008 Eretria Evia (GR); Kouini, Marina, 34 008 Eretria Evia (GR)
(72) Inventor: Kouinis, Dimitrios, 34 008 Eretria Evia (GR); Kouini, Marina, 34 008 Eretria Evia (GR)

(57) **Abstract**

Final mini metal frameworks (13,17,21,25,29,33) & (40,41,42,43,44,45) which are ready to accept the covering coatings from special plastic film in order to be assemble and operate as complete mini greenhouses for growing vegetables, plants or ornamental plants in the soil, pots or flowerpots, are manufactured in various shapes and dimensions with a width of 0.30 up to 1.20 meters, height from 0.30 to 2.00 meters, with many and practical ways of laying and supporting them both on arable land and fields, as well as on hard earth, cement, asphalt or with pavement slubs layered surfaces. The materials for their manufacture are solid metal rods of steel, iron, aluminum, etc. round shaped (1), square (2) or flat (3) in various lengths, diameters, widths and thicknesses or metal tubes of round cross-section 1A), square or rectangle (2A). Solid bars or tubes may be black, colorless or electrostatic paint, galvanized, plasticized, enamelled, nickel-plated or otherwise treated with anti-corrosion protection materials.

## Description

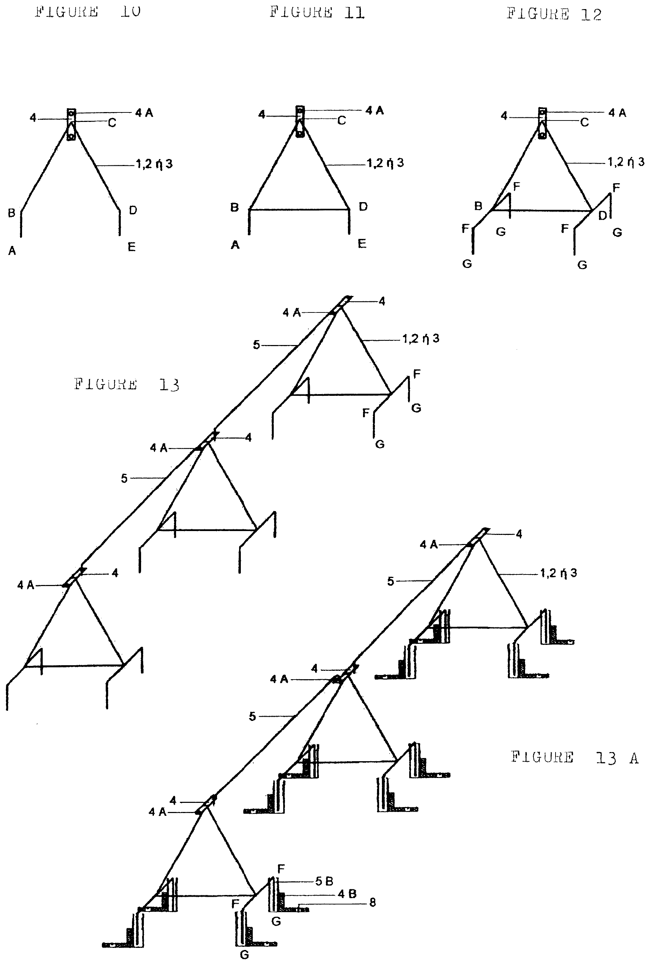

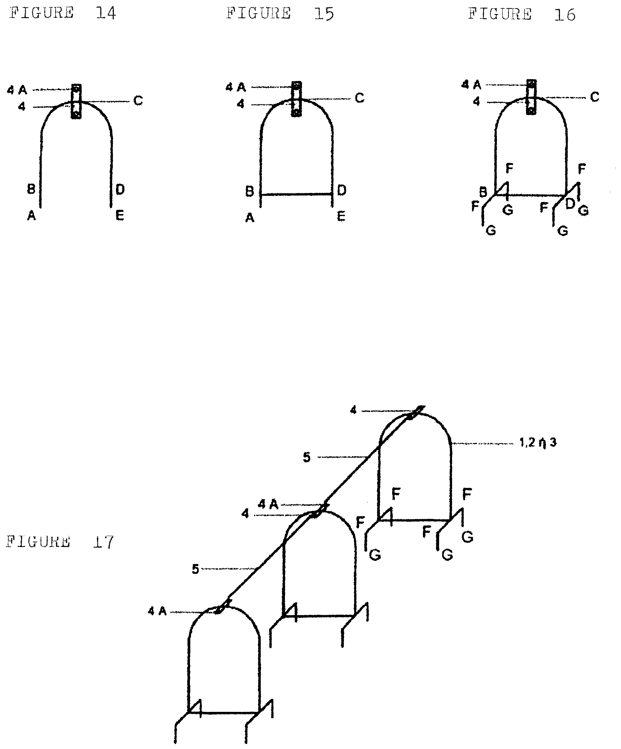

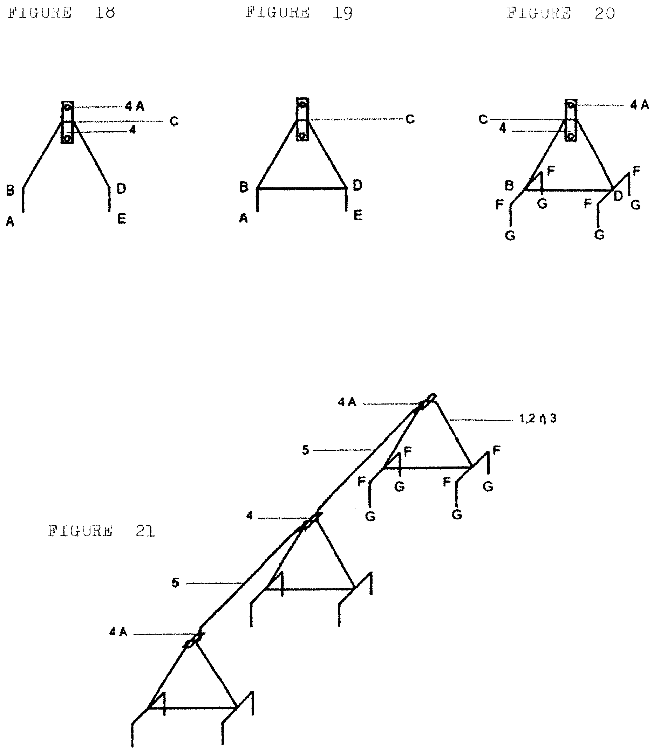

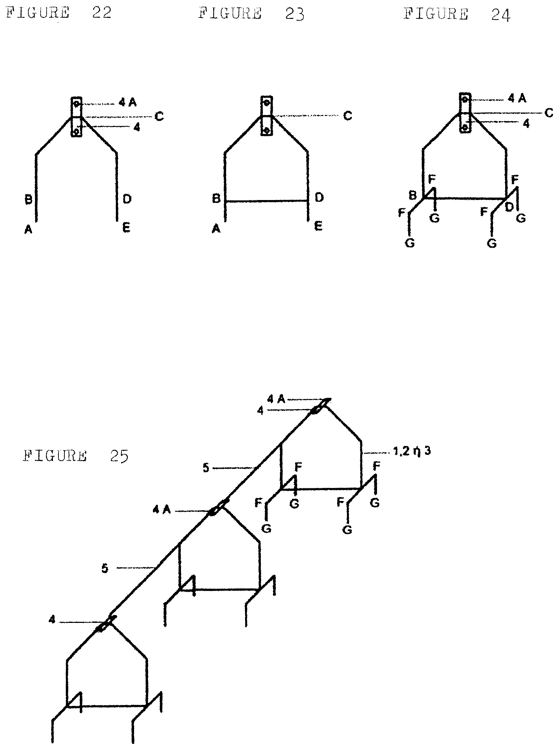

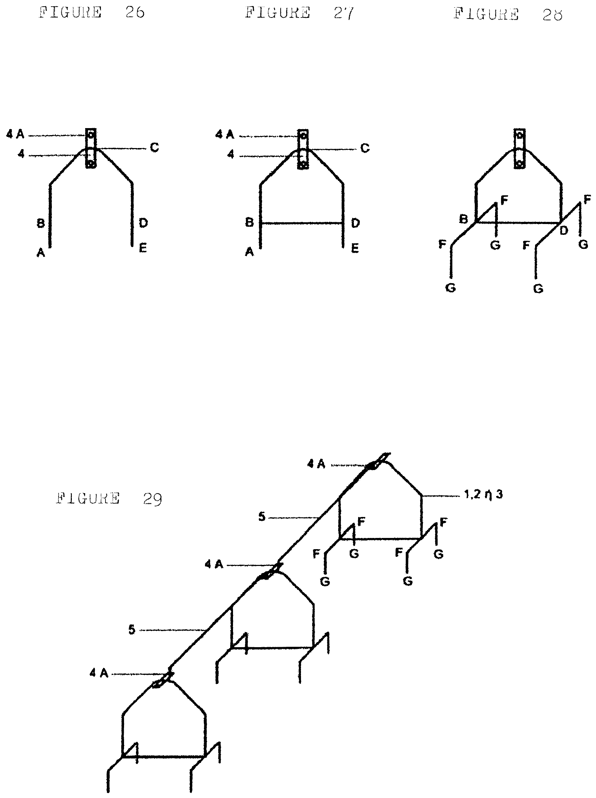

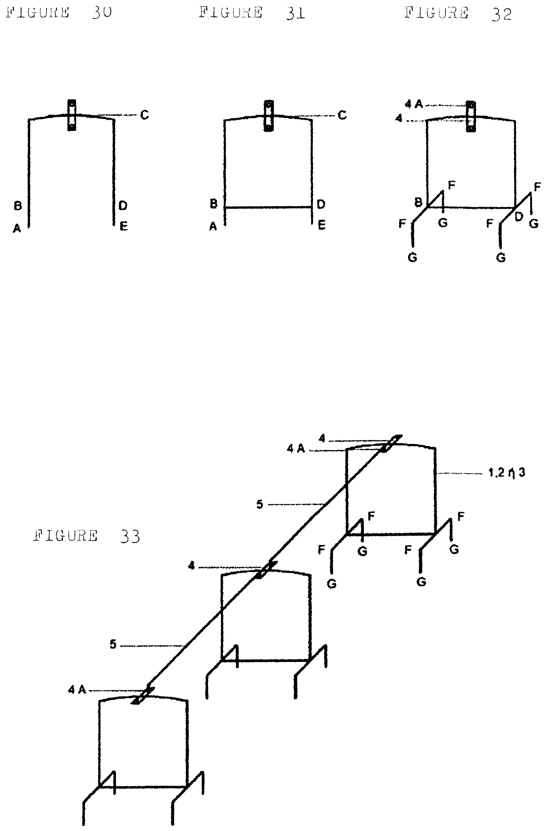

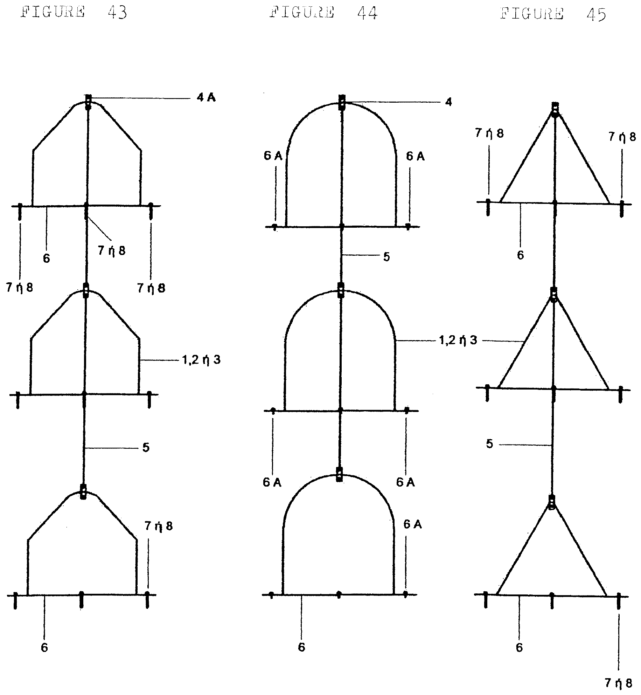

This patent relates to the construction and assembly of metal frameworks in various shapes, such as isosceles triangle with a top (C) acute angle or angle in arc form, (figures 10,11, 12),with a top (C) in semi-circle form (figures 14, 15, 16), with top in pyramid form (figures 18,19,20), with top (C) in trapezium form (figures 22,23,24), with top (C) in obtuse angle (figures 26,27,28), in square or rectangular form (figures 30,31,32). These frames are constructed in various dimensions, with a width of 0.30 to 1.20 meters, a height of 0.30 to 2.00 meters, with many new and practical ways of placing and supporting them both on arable land and fields, as well as on hard earth, cement, pavement slabs layered surfaces and the angle of the frames is from 45° to 90°. When these frames welded and assembled together with some other metallic components referred and described in the present invention, such as the metal support plate shape (4) with the holes (4A), the horizontal grounding rod of the frameworks with the ground BD), the metal support brackets (FG) and the support brackets (5 & 5A), are converted into finished and complete frames (figures 13,17,21,25,29,33 & 40,41,42,43,44,45). These final frameworks are suitable for assembling mini greenhouses after their coating with special plastic films for greenhouse for 100% greenhouse cultivation or for 20% greenhouse cultivation and 80% outdoor cultivation or for 100% cultivation by water culture method, vegetables such as tomatoes, cucumbers, peppers, aubergines etc. They can also be used for plants, aromatics plants and ornamentals plants such as cyclamen, gardens etc leafy plants which are planted in soil or in small, medium or large pots, gardens or pillars placed on earth or in asphalts pavement slabs layered surfaces.

From what we know up to now and from what we teamed after a survey we conducted both in the Greek market and on the internet and on the pages of the world-famous companies, GOOGLE, ALIBABA, AMAZON, SKROUTZ and others in Greece, we found that mini-metallic frameworks for the construction and assembly of mini greenhouses like those in the present patent do not exist.

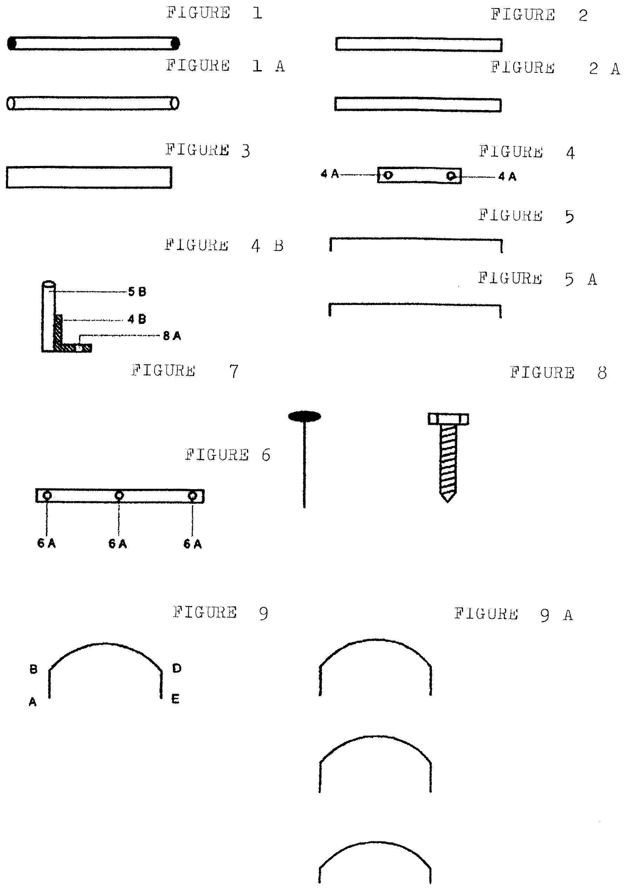

The only metal frameworks available for the construction and assembly of mini greenhouses in Greek and European market are the arched black and uncut steel frameworks in tunnel form (9) that are addressed to professional or amateurs farmers, vegetables growers and plant growers. Some of the problems and disadvantages of these tunnel shaped frameworks are the following:
1. They are manufactured and marketed only in one shape, the tunnel-shaped (9) and in limited dimensions in terms of width and height (9A) and are suitable only for soil and fields and not for concrete, asphalt or pavement slabs layered surfaces.
2. They are manufactured only from black and unpalatable solid steel rods, resulting in rusting easily and quickly from rains, humidity and air and then quickly destroyed.
3. Due to their small height and width, they do not allow the growth of both horticultural and other plants or ornamental plants of greater height, width and volume.
4. Due to the construction of the frame structures (Figure 9), their support bases (AB & ED) are inserted for fixing to the ground at a shallow depth and because the frameworks (9), (figure 9A) at their top (C) the metallic strip, (figure 4) with the holes have never been welded the fixing and support between the frames (9) by means of the retainer (5) is impossible and non- existent.
5.Due to the arc-shaped they do not have the right angle of inclination in sun 45° to 90° so they cannot absorb the low and the lateral winter solar rays and thus the inner chamber of the arched mini greenhouses (9A) which is made by metal frameworks (figure 9), will stay cold and so the vegetables, plants and ornamental plants due to the lack of heat during the winter and spring months have serious growth and fruiting problems and finally the farmers have small profits or destruction of production due to the cold in winter.

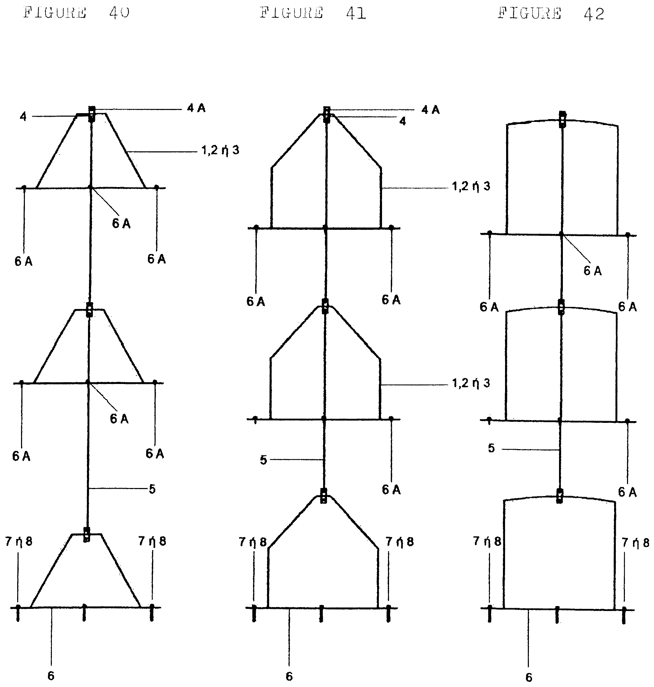

The most significant advantages of metal frameworks and by extension of mini greenhouses presented in this patent compared to those of arched tunnel shaped (9A) are the following:
1. They are manufactured, assembled and marketed in many shapes and dimensions in height and width and can be delivered even on request depending on the use that each farmer wants to make. So there is no problem with the height, width, type and volume of the plants to be cultivated.
2. They are manufactured and assembled with anti-rust materials and accessories, resulting in unlimited life.
3. The same final metal frameworks and especially those presented in the figures (13,17,21,25,29,33) or figures (40,41,42,43,44,45) can be used in three different ways of supporting and positioning. More specifically they are placed:
   A. In arable land and plots by simply inserting the support bases (AB, ED or FG) into the ground while simultaneously horizontalising the frameworks on the ground via the integral metal bar (BD), or by simply inserting the metal piles (7) into the ground through the holes (6A) and supporting bases (figure 6), figures 40,41,42,43,44,45).
   B. Underfloor placement on paved, asphalt or paved slabs layered surfaces leaving the bases (FG) on the above floor surfaces.
   C. By using either the metal fitting part (4B), by inserting the support bases (FG) into the tubular bore (5B) (figure 4B), while then we screw part (4B) with the metal spindle (8) on and over the cement, asphalt or pavement slabs layered surfaces, or by screwing the supporting base (figure 6) with the holes (6A) through the splines (8) of the frameworks (40,41,42,43,44,45) on and over the cement, asphalt or pavement slabs layered surfaces.
4. They have the right angle of inclination in the direction of the Sun, that is 45° to 90°, so they receive and absorb immediately the low and lateral winter solar rays. Thus, the interior chamber of the mini-greenhouses coming from the assembly of the framework (Figures 13,17,21,25,29,33 and figures 40,41,42,43,44,45) is warm and the plants and ornamental plants planted in soil, pots, gardens or staircases due to the existing temperature during the winter months have easy and rapid growth, blooming, fruiting and finally good profits for the farmer grower.

The metal frameworks of the present patent are manufactured in various dimensions, namely: Width from 0,30 to 1,20 meters and Height from 0,30 to 2,00 meters. The materials used for this construction are: Solid metal rods of steel, iron, aluminum, etc. round metal figure (1), square figure (2) or sheet metal figure (3) in different length, diameter, width and thickness. Solid bars or tubes may be black, colorless or electrostatic painted, galvanized, plasticized, enameled, nickel-plated or otherwise treated with anti-rust protection methods.

Incomplete frameworks shapes (figures 10,11,12 - 14,15,16 -18,19,20 - 22,23,24 - 26,27,28-30,31,32) when assembled with the support brackets (BA, DE & FG), the metal support plate (Figure 4) with the holes (4A) welded to the top of the frameworks (C) with the bracket (figure 5) which is placed in the holes (4A) between the frames, present the final and complete frames of mini greenhouse (Figures 13,17,21,25,29,33).

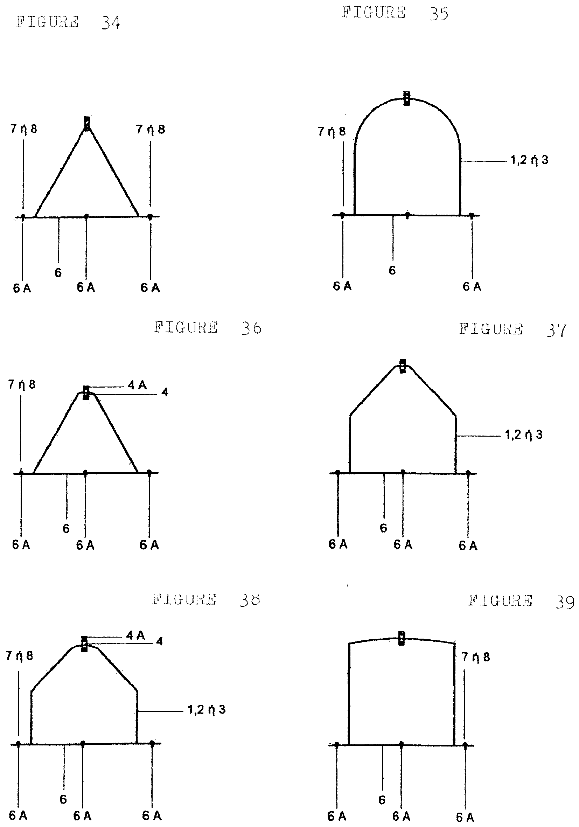

The incomplete frameworks (Figures 34,35,36,37,38,39) when welded to the base support (Figure 6) with the holes (6A), at points (B & D) and fixing them through metal piles (Figure 7) into the soil through the holes (6A) and support structure (Figure 5) which is placed in holes (4A) between frameworks then final complete frameworks are assembled (Figures 40,41,42,43,44,45) and are suitable for mini greenhouses for the production of horticultural and other plants on arable farmland and fields.

However, when the same incomplete frameworks (Figures 34,35, 36, 37,38,39) welded with support bases (Figure 6) with the holes (6A) at points (B& D) and we fix these metal frameworks through the metal crowns (Figure 8) in cement asphalt or pavement slabs and in the support bracket (Figure (5) which is placed on the holes (4A) between the frameworks, then final complete metal frameworks are assembled (Figures 40,41,42,43,44,45) suitable for mini greenhouses not only for arable land and fields, but also for cement, asphalt or pavement slabs in which vegetables can be grown, any kind of plants or ornamental plants planted not on the dirt ground but in small, medium or large pots, cardboard boxes or cabinets (Figures 40,41,42,43,44,45).

### How to manufacture mini metal frameworks TYPE A' Figures (13,17,21,25,29,33)

The process of manufacturing these frames includes the following phases of work. We cut with the circular saw the long, straight rods figures (1,2 or 3) at specific straight lengths according to the dimensions and shape of the frame we want to manufacture. Next, we form the already sliced rod manually, with an electric boring machine or an electric metal bending machine in the shape of the semi frame we want to manufacture like the figures (10,14,18,22,26,30). Then at the top of semi framework (Figures 10,14,18,22,26,30) and at the point (C) the metal sheet is welded (Figure 4) with the holes (4A) in which later we place the base metal rod between the frameworks (5). Thus, the semifinal frameworks became final and complete and are ready for normal placement and fixation within the ground simply by swinging the ends of their support bases (BA & DE) into the ground.

For better support of these frames on the surface of the ground, we weld the horizontal rod (DB) with the electro welding (Figures 11,12,15,16,19,20,23,24,27,28,31,32) and the metal rod (FG) (Figures 12, 16, 20, 24, 28, 32) such that these frames contact better in a horizontal position, after the bases (BA, DE & FG) hit the ground.

In particular, the mini metal frameworks (Figures 13, 17, 21, 25, 29, 33) are suitable:
1. For placement on arable farmland and fields simply by dropping the support bases (FG) into the ground.
2. For laying directly to the ground of the frames simply by pressing the support bases (FG) on cement, asphalt or pavement slabs layered surfaces
3. For placing the frames on concrete, asphalt or pavement surfaces, screwing the fittings (figure 4B) with the metal studs (8) onto them, while the frame support bases (FG) are inserted into the tubular bore (5B) of the fitting (4B) for final fastening.

### How to manufacture mini metal frameworks TYPE B' Figures (40,41,42,43,44,45)

Mini metal frameworks TYPE B' (figures 40,41,42,43,44,45), are suitable for installation on both paved, asphalt or pavement slabs layered surfaces, as well as for placement on arable farmland or fields.

The manufacturing process for these frames is the same as the before mentioned for the construction of the TYPES A frames in the present patent. The difference between the TYPE A and TYPE B frames is only the way to support them both on the ground and on the concrete, paved or pavement slabs layered surfaces.

If we want to cultivate plants and vegetables of greater height and volume, then we are assembling mini greenhouses using metal frameworks (Figures 12,16,20,24,28,32) with support bases (FG) or mini greenhouses with frameworks (Figures (34, 35,36,37,38,39) using the metal base support (Figure 6) with the holes (Figure 6A), the metal piles (Figure 7) for arable land and fields, or the metallic rosettes (Figure 8) for cement, asphalt or paved slabs layered surfaces.

For the final length of a mini greenhouse using metal skeletons, the grower user must always use the same shape and the same size of the final framework (Figures 13,17,21,25,29,33 or Figures 40,41,42,43,44,45). The user places in the row and along the metal frameworks and fixes them together by means of the welded to the top (C) metal plate (4) with the holes (4A) and the retaining (Figure 5), which is placed inside the holes (4A) between two frames. The length of each retaining (Figure 5) can be 1.00, 1.50 or 2.00 meters. The total length of the frames for the assembly of a mini greenhouse can be 1,00 - 2,00 - 5,00 - 10,00 - 20,00 - 50,00 - 100,00 or more current meters for each mini - greenhouse.

The mini-metallic frameworks for the construction of the mini-greenhouses described in the present patent are illustrated in the drawings, the brief description of which is an embodiment of the patent by way of example, without being a limitation:
- In Figure 1: Round metal solid steel, iron, aluminum, etc. metal is depicted in order to be used for the construction of complete frames for mini greenhouses.
- In Figure 1A: A tube of round steel, galvanized, aluminum, copper, etc., of 3/8" - 1/2 " - 3/4" inches diameter to be used for the construction of complete frames for mini greenhouses is illustrated.
- In Figure 2: A square solid steel rod of steel, iron, aluminum, etc., is depicted in order to be used for the construction of complete frames for mini greenhouses.
- In Figure 2A: A square or rectangular tube, steel, galvanized, aluminum, copper etc. metal in dimensions 15x15 - 15x20 - 20x20 - 10x20mm is presented, in order to be used for the construction of complete frames for mini greenhouses.
- In Figure 3: Solid steel plate, steel, iron, aluminum, etc metals, is presented in order to be used for the construction of complete frames for mini greenhouses.
- In Figure 4: Solid metal plate (4) with the holes (4A) which you always adhere to the top (C) of all metal frames is presented. The chuck (4) is used for supporting and retaining between the frames during the longitudinal installation of two, three or more frameworks through the retainer (5) and the holes (4A).
- In Figure 4B: The metal base of the frameworks is illustrated when these frames are to be laid on concrete, asphalt or pavement slabs, as is illustrated in Figure 13A, where this metal base is fixed to these surfaces by the metallic struts (8) through the holes (8A).
- In Figure 5/5A: The metal support bracket between the complete metal frames is presented for both the longitudinal installation and support of the mini greenhouse frames (5) and the lateral support for increased protection in areas with strong winds and many beaufort (5A).
- In Figure 6: A metal base laying directly in the ground for supporting and fixing with the holes (6A) is presented which can be used either for cultivated soils by passing through the holes (6A) the metallic piles (7) for fining in paved concrete, asphalt or pavement slabs, by screwing these bases (6) through the holes (6A) with the metallic rivets (8) (Figures 34,35,36,37,38,39,40,41,42,43,44 & 45).
- In figure 7: A metal pile which is suitable for supporting and fixing the metal frameworks by plowing these piles into arable soil formations is presented (Figures 34,35,36,37,38,39,40,41,42,43,44 & 45).
- In Figure 8: The metallic rivet suitable for fastening metal frames only for concrete, asphalt or pavement slabs, layered surface is presented (Figures 34,35,36,37,38,39,40,41,42,43,44 & 45).
- In Figure 9: The metal frame for the assembly of mini-greenhouses of a tunnel-like form is presented.
- In figure 9A: The fitting of two, three or more frameworks (9) to assemble a tunnel-shaped mini greenhouse is presented.
- In Figure 10: A simple metal frame with the support and fastening (AB) & (ED) bases for arable land, as well as a solid metal plate (4) with the holes (4A) welded to the top (C) of the metal frame ready to receive the retaining and fixing of the fitting (5).
- In Figure 11: The figure (10) is again presented, but with the metal rod (BD) adhering to both the base (AB) & (ED) and the better grounding of the frames on the ground surface, when we put the bases (AB) & (ED) into the soil.
- In Figure 12: The figure (11) is presented without the support and fixing brackets (AB) and (ED), but with its own mounting and fixing bases (GF, FG) suitable both for graveling on arable farmland and for laying directly on cemented, asphalt or pavement slabs layered surfaces with the points (G) of the bases.
- In Figure 13: Three or more complete metal frames (12) assembled together by means of the holes (4A) of the solid plate (4) and the support backings (5), ready to receive the coating covers by special plastics films for mini greenhouses in order to be assemble and operate a complete mini greenhouse.
- In Fugure 13A: It is presented how to support and fix three or more metal frames (13) only on cemented, asphalt or pavement slabs layered surfaces using the support bases (4B) and the metallic fasteners (8).
- In Figure 14: A simple semicircular metal framework is presented along with the support and fastening (AB) & (ED) stands for arable soil, as well as the solid metal plate (4) with the holes (4A) welded to the top (C) of the metal frame ready to receive the retaining and fixing of the component (5).
- In Figure 15: The shape (14) is presented again, but with the metal rod (BD) adhered to both the base (AB) and (ED) and better grounding of the frameworks on the ground surface, when we put the bases (AB) & (ED) into the soil.
- In Figure 16: The shape (15) is illustrated without the support and fastening (AB) and (ED) but with its own support and fixing bases (GF, FG) suitable both for graveling on arable land and for laying directly on cemented, asphalt or pavement slabs layered surfaces with the points (G) of the bases.
- In Figure 17: Three or more complete metal frames (16) are assembled together through the holes (4A) of the plate (4) and the retaining supports (5), ready to receive the coating covers by special plastic films for mini greenhouses in order to assemble and operate a complete mini greenhouse.
- In figure 18: A simple to build pyramid metal frame together with the support and fastening bases (AB) & (ED) is presented for arable farmland as well as the solid metal plate (4) with the holes (4A) welded to the top (C) of the metal frame ready to receive the retaining and fixing of the component (5).
- In Figure 19: Figure (18) is presented again, but with the metal rod (BD) adhered, which serves both for better fixing between the two bases (AB) and (ED), and for better horizontalisation of the frames on the ground surface, when entering the bases (AB) & (ED) into the soil.
- In Figure 20: The shape (19) is presented without the support and fixing (AB) and (ED) stands but with its own mounting and fixing bases (GF, FG) suitable both for graveling on arable farmland and for laying directly on cemented, asphalt or pavement slabs surfaces with the points (G) of the bases.
- In Figure 21: Three or more complete metal frames (20) are presented which are mounted together through the holes (4A) of the plate (4) and the support struts (5), ready to receive the coating covers by special plastic films for mini greenhouses in order to assemble and operate a complete mini greenhouse.
- In Figure 22: A simple metallic frame in the shape of a trapezoid is presented, with the support and fixing (AB) & (ED) stands for arable soil, as well as the solid metal plate (4) with the holes (4A) welded to the top (C) of the metal frame ready to receive the retaining and fixing of the component (5).
- In Figure 23: Figure (22) is again depicted, but with the metal rod (BD) adhered, which serves both for better fixing between the two bases (AB) and (ED) and for better horizontalisation of the frames on the ground surface, when we put the bases (AB) & (ED) into the soil.
- In Figure 24: Figure (23) is presented without the support and fixing (AB) and (ED) but with its own support and fixing bases (GF, FG) suitable both for their application to arable soil and for laying directly on cemented, asphalt or pavement slabs layered surfaces with the points (G) of the bases.
- In Figure 25: Three or more complete metal frames (24) are presented mounted together through the holes (4A) of the plate shell (4) and the support struts (5), ready to receive the coating covers by special plastic films for mini greenhouses in order to assemble and operate a complete mini greenhouse.
- In Figure 26: A simple metallic frame in form of the upper obtuse angle (C) is illustrated with the supporting and fixing (AB) & (ED) bases for arable farmland as well as the solid metal plate (4) with the holes (4A) welded to the top (C) of the metal frame ready to receive the retaining and fixing of the fitting (5).
- In Figure 27: The figure (26) is again depicted, but with the metal rod (BD) adhered to it, which serves both for better fixing between the two bases (AB) and (ED) and for better horizontalisation of the frameworks on the ground surface , when we put the bases (AB) & (ED) into the soil
- In Figure 28: The shape (27) is illustrated without the support and fixing brackets (AB) and (ED), but with its own supporting and fixing bases (GF, FG) suitable for both graveling on arable land and for floor laying on cemented, asphalt or pavement slab surfaces with the points (G) of the bases.
- In Figure 29: Three or more complete metal frameworks (28) are presented mounted together through the holes (4A) of the plate shell (4) and the support struts (5), ready to receive the coating covers from special plastic films for mini greenhouses in order to assemble and operate a complete mini greenhouse.
- In Figure 30: A simple metal frame in form of a square or rectangle is depicted together with the supporting and fastening (AB) & (ED) stands for arable soil, as well as the solid metal plate (4) with the holes (4A) welded on the top (C) of the metal frame ready to receive the retaining and fixing of the component (5).
- In Figure 31: Figure (30) is again depicted, but with the metal rod (BD) adhering, which is used for better fastening among the bases (AB) and (ED), as well as for better grounding of the frames on the ground surface, when we put the bases (AB) & (ED) into the soil.
- In Figure 32: The shape (31) is depicted without the support and fixing (AB) and (ED) but with its own support and fixing bases (GF, FG) suitable both for graveling on arable soil and for underfloor placement on cemented, asphalt or pavement slab surfaces with the points (G) of the bases.
- In Figure 33: Three or more complete metal frameworks (32) are presented but mounted together through the holes (4A) of the plate shell (4) and the support struts (5), ready to receive the coating covers by special plastic films for mini greenhouses in order to assemble and operate a complete mini greenhouse.
- In Figures 34-35-36-37-38-39: Simple, incomplete metal frameworks, ready to be assembled in complete frameworks for the construction of professional or amateur mini greenhouses, are depicted. These frames have the advantage of incorporating the supporting and fixing base (6), the holes (6A) through which the metal piles are inserted (7) for fixing the bases (6) on arable land, or the metal struts (8) for fastening the bases (6) with the frames on cemented, asphalt or pavement slabs. Also, over the metal frameworks solid metal plates (4) are welded ready to receive the retaining and fixing (5). Numbers 1, 2 & 3 in figures represent the type of material used for framework construction, so 1 is solid metal rod in circular rod, 2 is solid metal rod in square form and number 3 represents the solid metal plate.
- In Figures 40-41-42-43-44-45: Three or more complete metal frameworks are presented assembled through the solid metal plate (4) backing supports (5) metal piles (7) for fixing the bases (6) with the frames on the concreted, asphalt or pavement slabs, ready to receive the cover coatings by special plastic films for mini greenhouses in order to assemble and to operate a complete mini greenhouse.

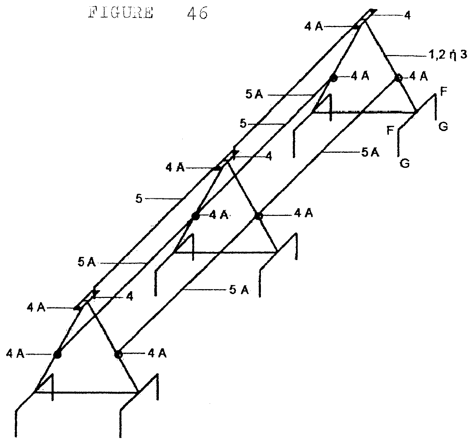

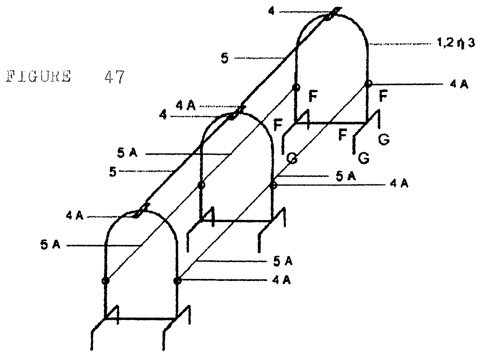

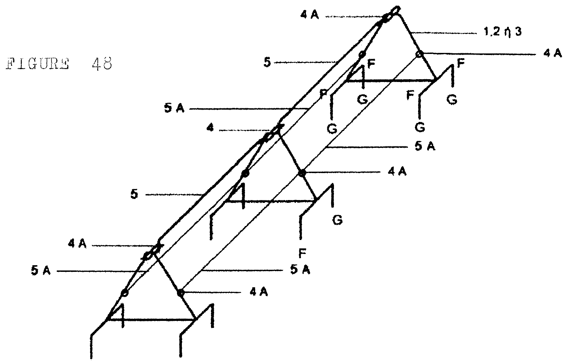

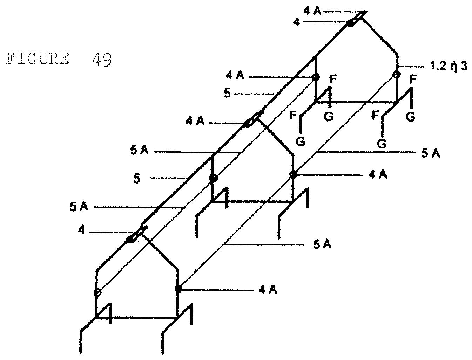

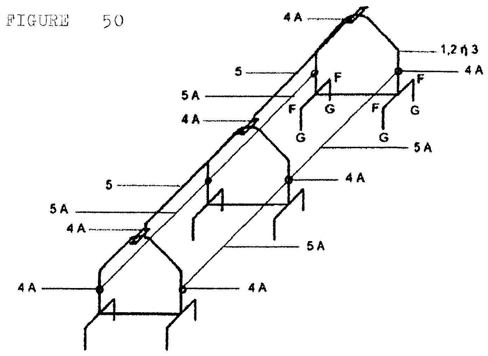

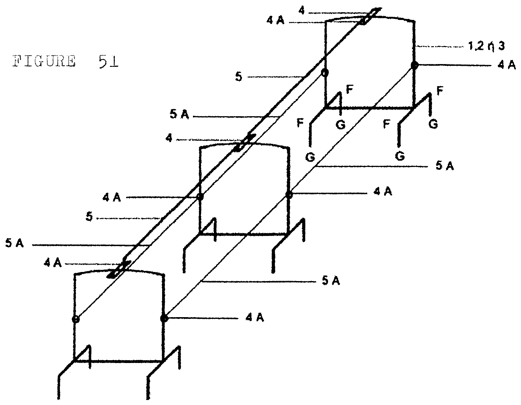

- In Figures 46,47,48,49,50 & 51: They are the same as those shown in Figures 13, 17, 21, 25, 29 & 33, except that on Figures 46, 47, 48, 49, 50 & 51, for safety reasons and better fixing against strong winds and the many beaufort that may prevail in some area, have been assembled on the two lateral sides of the frames with additional retaining brackets (5A).

## Claims

1. Mini metal frame for greenhouse assembly, **characterized in that** it is used for the construction of greenhouses in many different shapes with dimensions of width from 0.30 to 1.20 meters and height from 0.30 to 2.00 meters, which greenhouses are installed both on arable land and fields, as well as in hard earth, cement, asphalt or pavement slabs, with many and practical ways of laying and supporting them, which metal frame consists of:
metal solid round bars (1), square (2) or plate (3) or metal tubes with cross section (1A), square (2A) or rectangular (2A), which rods or tubes are formed with two lateral legs at a distance corresponding to the final width of the greenhouse, which legs converge at an angle from 45 ° to 90 ° to form a top (C) on which a plate (4) which has holes (4A) is welded or screwed, the distance of the top of the installation surface corresponds to the final height of the greenhouse and wherein a plurality of the above-formed metallic rods or metal pipes are arranged parallel to a certain distance between them, forming the total length of the greenhouse which can be 2,3,5,10,20,50 or more current meters for each greenhouse series irrespective of the shape it has.
a longitudinal bar retaining support (5) inserted into the holes (4A) of the successive installed rods or tubes, plates (4) extending over the whole length of the greenhouse, which are installed on the top; and
means for supporting the lateral legs of each element of successively installed struts or pipes, either on arable land and fields, or on hard earth, cement, asphalt or pavement slabs, where the upper metal structure is covered with coatings of special plastic films for greenhouse.

2. Mini metal frame for greenhouse assembly according to claim 1, **characterized in that** solid metal rods or metal pipes are used in various lengths, diameters, widths and thicknesses, whether black or black painted with colouring or electrostatic paint, galvanized, plasticized, nickel-plated, enameled, or other media coated with moisture and rust protection materials, and that solid metal rods or metal tubes are formed in different including shapes of an isosceles triangle with an acute angle or an angle of apse, semicircle, trapezium, pyramid, square or rectangle.

3. Mini metal frame for the assembly of greenhouses according to claim 1, **characterized in that** the lateral legs of each element of the successively installed metal struts or tubes are connected
with rod (BD) for supporting and horizontalizing solid metal rods or pipes on the ground and supporting base of metal element (FG) with morphology (Π) either grounded by locking the legs of the metal element (FG) on the soil or either on hard earthen or cement or asphalt or pavement slabs, layered surfaces by simply seating the legs of the metal element (FG) on these surfaces
either with a base plate (6) extending somewhat beyond the legs and having holes (6A) and the supporting means of solid metal rods or pipes on arable crop soils and fields are piles (7) passing through the holes (6A) into the ground while the support means of metal struts or pipes on hard ground or cemented or pavement slabs surfaces are struts (8) which also pass through the holes (6A).
either by screwing with metallic rivet (8) on cement or asphalt or pavement slabs, layered surfaces, a metallic component (4B) which carries a tube part with hole (5B) and locking the legs of the metal element (FG) in the holes (5B) of the component (4B).

4. Mini metal frame for greenhouse assembly according to any one of the claims 1-3, **characterized in that** the lateral legs of each element of the successively installed metal struts or tubes have plates (4) through which additional rod retaining supports (5A) inserted into the holes (4A) of the plates (4) installed on the lateral legs to enhance protection in areas with strong winds and many beaufort.

5. Mini metal frame for greenhouse assembly according to any one of claims 1-4, **characterized in that** it is used for soldering or permanent assembly and installation of mini-greenhouses for four different production methods:
A. For 100% exclusive greenhouse cultivation with coatings of special plastic film for greenhouses.
B. For about 20% greenhouse cultivation with coatings of special plastic film for greenhouses and about 80% for outdoor cultivation with the removal of cover covers.
C. For 100% greenhouse cultivation with the water culture method with coatings made of special plastic films for greenhouses.
D. For 100% outdoor cultivation of horticultural, ornamentals, etc., by removing from the metal frames the covers from the special plastics films for greenhouses and adding new sunscreen knitted shade covers with small holes suitable for the protection of plants from hail in spring season and for the protection of horticultural, ornamentation and in particular of tomato from the vertical and very hot summer sun rays.

6. Mini metal frame for greenhouse assembly according to any one of the claims 1-5, **characterized in that** the mini greenhouse is easily equipped with an automatic watering system and / or an automatic central heating system with hot water produced by solar panels or heat produced by electric thermal wires.

7. Mini-frame for greenhouse assembly according to any one of claims 1 to 6, **characterized in that** both the coating of special plastic film for greenhouses and the sunblind knitted shading coatings can be easily and quickly along the entire length of the frameworks open-handed by hand, depending on the type of crops and vegetables.
